# FASCICULE DE BREVET EUROPEEN

(11) **EP 0 443 942 B1**
(45) Date de publication et mention de la délivrance du brevet: **11.10.1995**
(21) Numéro de dépôt: 91400441.1
(22) Date de dépôt: 19.02.1991
(51) Int. Cl.: G11B 5/21, G11B 5/255, G11B 5/31

(54) **Procédé de réalisation d'une pièce polaire supérieure pour tête magnétique et pièce polaire supérieure obtenue par ce procédé**
Herstellungsverfahren eines oberen Polschuhes eines Magnetkopfes und nach diesem Verfahren hergestellter obere Polschuh
Manufacturing process for an upper pole piece of a magnetic head and upper pole piece produced by this process

(30) Priorité: 21.02.1990 FR 9002114
(43) Date de publication de la demande: 28.08.1991
(73) Titulaire: COMMISSARIAT A L'ENERGIE ATOMIQUE, 75015 Paris (FR)
(72) Inventeur: Fedeli, Jean-Marc, F-38140 Beaucroissant (FR); Sibuet, Henri, F-38120 Le Fontanil (FR)
(74) Mandataire: Signore, Robert

(56) Documents cités:
- US-A- 3 737 583
- PATENT ABSTRACTS OF JAPAN vol. 13, no. 382 (P-923)(3730) 24 août 1989
- PATENT ABSTRACTS OF JAPAN vol. 6, no. 88 (P-118)(966) 26 mai 1982
- PATENT ABSTRACTS OF JAPAN vol. 10, no. 135 (P-457)(2192) 20 mai 1986
- PATENT ABSTRACTS OF JAPAN vol. 11, no. 208 (P-593)(2655) 07 juillet 1987

## Description

La présente invention a pour objet un procédé de réalisation d'une tête magnétique à deux matériaux magnétiques, et une tête obtenue par ce procédé.

L'invention trouve une application dans la réalisation de deux types de têtes magnétiques, soit volantes, pour enregistrement sur disque, soit à contact, pour enregistrement sur bande.

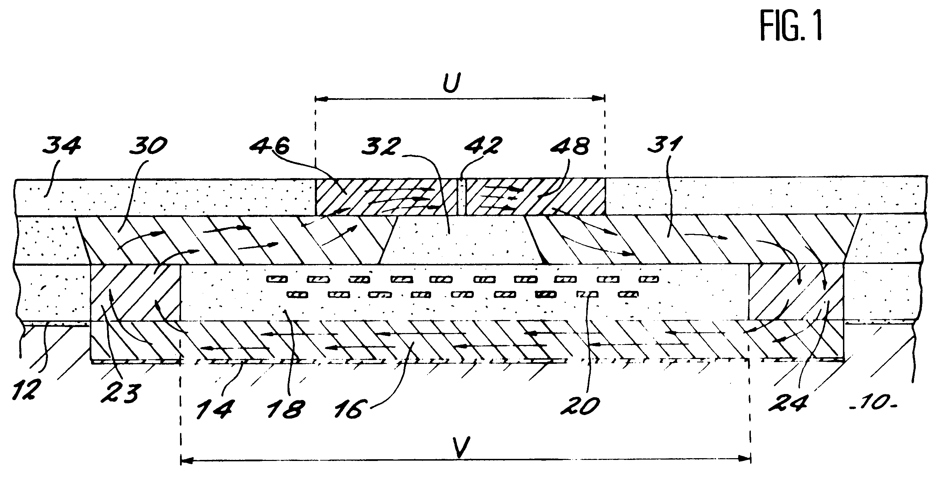

Le document de brevet français FR-A-2 604 021 reflétant le préambule des revendications indépendantes, décrit un procédé de réalisation d'une tête magnétique à couches minces et à structure planaire. La tête obtenue par ce procédé est représentée en coupe sur la figure 1 annexée. Elle comprend un substrat 10 dans lequel un premier caisson a été comblé par une première couche magnétique 16 obtenue par croissance électrolytique sur une électrode 14, un bobinage 20 noyé dans une couche isolante 18, deux plots magnétiques 23, 24, une deuxième couche magnétique formant deux concentrateurs de flux 30, 31, un îlot central isolant 32, une couche isolante 34, par exemple en silice, définissant un autre caisson qui a été comblé par une autre couche magnétique formée également par croissance électrolytique, cette couche étant séparée en deux parties 46, 48 par un espaceur amagnétique 42 constituant l'entrefer de la tête.

Une tête analogue peut être obtenue en supprimant les concentrateurs de flux 30 et 31 et en faisant en sorte que la couche supérieure 46, 48 prenne appui directement sur les plots 23, 24.

Dans ce qui suit, on désignera par "pièce polaire supérieure", la partie magnétique disposée de part et d'autre de l'espaceur 42, sachant que la pièce polaire inférieure est celle qui correspond à la couche magnétique 16.

La pièce polaire supérieure est donc obtenue, dans cette technique antérieure, par dépôt électrolytique. Un matériau magnétique qui se prête bien à cette technique est, par exemple, l'alliage fer-nickel de composition 80/20, qui est un matériau doux.

Bien que donnant satisfaction à certains égards, cette technique présente des inconvénients. En effet, le choix d'un matériau magnétique susceptible d'être déposé électrolytiquement est relativement limité et l'alliage fer-nickel est, finalement, l'un des rares matériaux qui convienne. Or, ce matériau n'offre pas toutes les qualités requises, en particulier, parce qu'il présente une dureté mécanique assez faible (dureté Vickers de l'ordre de 100). Cette faiblesse interdit pratiquement de réaliser, par cette technique, des têtes à contact en raison de l'usure rapide qui en résulterait. De plus, les matériaux magnétiques électrolysables utilisés classiquement n'offrent pas des caractéristiques magnétiques optimales (par exemple : aimantation à saturation, perméabilité magnétique, ...).

Il existe naturellement d'autres matériaux magnétiques présentant une dureté et/ou des caractéristiques magnétiques supérieures, mais ils ne se prêtent pas au dépôt électrolytique. Il faut les traiter par exemple par pulvérisation cathodique. Mais, dans ce cas, il est très difficile d'obtenir une couche magnétique homogène, en particulier épaisse, de part et d'autre d'un entrefer, comme c'est le cas avec la technique électrolytique.

Le document JP-A-1 133 210 décrit une tête magnétique utilisant deux matériaux différents dont l'une peut être obtenuepar dépôt électrolytique.

La présente invention utilise également deux matériaux différents pour remédier aux inconvénients cités. A cette fin, elle préconise un procédé qui combine les avantages des matériaux magnétiques doux aptes à être déposés électrolytiquement avec une bonne homogénéité, en particulier au voisinage de l'entrefer et ceux d'autres matériaux que l'on déposera par tout autre moyen, notamment par pulvérisation cathodique, et qui permettent l'obtention de meilleures propriétés mécaniques et/ou magnétiques.

De façon précise, la présente invention a pour objet un procédé de réalisation d'une pièce polaire supérieure pour tête magnétique en couches minces, ce procédé comprenant une opération de dépôt électrolytique, dans un caisson gravé dans une couche isolante, d'une couche d'un premier matériau magnétique de part et d'autre d'un espaceur amagnétique, ce procédé étant caractérisé par le fait qu'il comprend les opérations suivantes :
- on dépose électrolytiquement ledit premier matériau magnétique sur l'intégralité du fond du caisson et sur une partie seulement de la hauteur du caisson,
- on dépose sur l'ensemble un second matériau magnétique, ayant des propriétés magnétiques et/ou mécaniques de dureté supérieures à celles du premier, ce second dépôt n'étant pas électrolytique,
- on polit la surface de l'ensemble jusqu'à dégagement de l'espaceur amagnétique.

L'invention a également pour objet un procédé de réalisation d'une pièce polaire supérieure pour tête magnétique en couches minces, ce procédé comprenant une opération de dépôt électrolytique, dans un caisson gravé dans une couche isolante, d'une couche d'un premier matériau magnétique de part et d'autre d'un espaceur amagnétique, ce procédé étant caractérisé par le fait qu'il comprend les opérations suivantes :
- on dépose électrolytiquement ledit premier matériau magnétique sur une partie du fond du caisson adjacente à l'espaceur amagnétique et sur toute la hauteur de cet espaceur amagnétique,
- on dépose sur l'ensemble un second matériau magnétique ayant des propriétés magnétiques et/ou mécaniques de dureté supérieures à celles du premier, ce second dépôt n'étant pas électrolytique,
- on polit la surface de l'ensemble jusqu'à dégagement de l'espaceur amagnétique.

La présente invention a également pour objet une pièce polaire supérieure pour tête magnétique en couches minces, cette pièce polaire étant disposée dans un caisson gravé dans une couche isolante de part et d'autre d'un espaceur amagnétique, caractérisée par le fait qu'elle comprend un premier matériau magnétique déposé électrolytiquement et occupant l'intégralité du fond du caisson et une partie seulement de la hauteur du caisson et un second matériau magnétique ayant des propriétés magnétiques et/ou mécaniques de dureté supérieures à celles du premier, et occupant le dessus du caisson, ce second matériau étant déposé par un moyen autre que la croissance électrolytique.

La présente invention a encore pour objet une pièce polaire supérieure pour tête magnétique en couches minces, cette pièce polaire étant disposée dans un caisson gravé dans une couche isolante de part et d'autre d'un espaceur amagnétique, caractérisée par le fait qu'elle comprend un premier matériau magnétique déposé électrolytiquement et occupant une partie du fond du caisson adjacent à l'espaceur amagnétique et sur toute la hauteur de cet espaceur et un second matériau magnétique ayant des propriétés magnétiques et/ou mécaniques de dureté supérieures à celles du premier et occupant le reste du caisson, ce second matériau étant déposé par un moyen autre que la croissance électrolytique.

De préférence, le premier matériau magnétique occupe une largeur de l'ordre de 1 à quelques micromètres de part et d'autre de l'espaceur amagnétique.

De préférence encore, le premier matériau magnétique est en fer-nickel.

De préférence encore, le second matériau est pris dans le groupe constitué par les alliages : nickel-molybdène-fer, fer-aluminium, fer-silicium-aluminium, cobalt-fer-silicium-bore, cobalt-zirconium-niobium, cobalt-zirconium.

De toute façon, les caractéristiques et avantages de l'invention apparaîtront mieux à la lumière de la description qui va suivre. Cette description porte sur des exemples de réalisation donnés à titre explicatif et nullement limitatif et elle se réfère à des dessins annexés sur lesquels :
- la figure 1, déjà décrite, montre en coupe une tête magnétique selon l'art antérieur,
- la figure 2 illustre diverses étapes du procédé de l'invention dans un premier mode de réalisation,
- la figure 3 illustre diverses étapes du procédé de l'invention dans un second mode de réalisation.

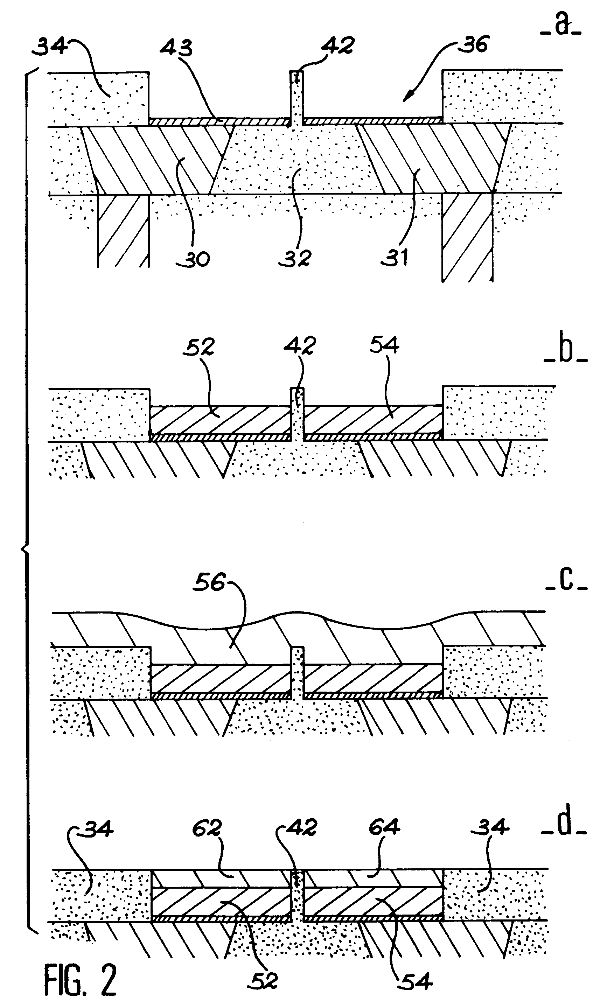

Sur la figure 2, partie a, on voit une étape intermédiaire du procédé de fabrication tel que divulgué par le document FR-A-2 604 021 déjà cité, et plus particulièrement l'étape illustrée par la figure 5, partie l de ce document. A ce stade, la tête comprend, à sa partie supérieure, un caisson 36 gravé dans la couche isolante 34, avec un espaceur amagnétique 42 ; une couche métallique 43 a été déposée au fond du caisson, pour servir d'électrode lors de l'étape de dépôt électrolytique qui doit suivre.

Sur la partie b de la figure 2, on voit que la croissance du premier matériau magnétique par électrolyse est interrompue avant que la couche magnétique 52, 54 n'ait comblé le caisson. Pour un caisson de 5 micromètres de profondeur par exemple, on formera une couche magnétique 52, 54 de 4 micromètres d'épaisseur environ, laissant ainsi un vide de 1 micromètre.

On dépose ensuite sur l'ensemble (partie c) une couche 56 du second matériau magnétique et cela par tout moyen autre qu'électrolytique, et notamment par pulvérisation cathodique.

Enfin, on polit mécaniquement la face supérieure de la tête jusqu'à dégager le sommet de l'espaceur amagnétique 42 (partie d), ce qui laisse subsister la couche 62, 64 dans la partie supérieure du caisson. L'épaisseur de cette couche peut être de l'ordre du micromètre.

Les propriétés magnétiques d'une telle tête sont celles de la couche 62, 64 du second matériau et ces propriétés seront meilleures que celles de la couche 52, 54 déposée électrolytiquement, sans que la qualité des dépôts n'en soit diminuée.

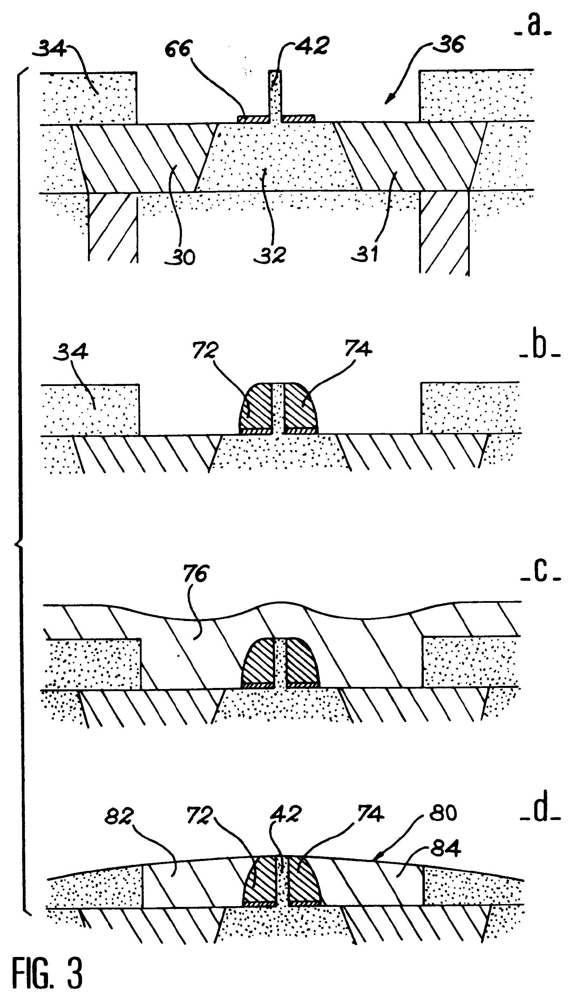

La figure 3 illustre le second mode de réalisation de l'invention correspondant au cas des têtes à contact.

La structure de départ (partie a) correspond sensiblement à celle de la figure 2, partie a, si ce n'est que la couche conductrice 66 destinée à former l'électrode nécessaire au dépôt électrolytique qui va suivre, n'occupe pas tout le fond du caisson 36, mais seulement une partie étroite située au pied de l'espaceur amagnétique 42. La largeur de cette électrode peut être, par exemple de 2 micromètres. On fait croître ensuite électrolytiquement, de chaque côté de l'espaceur et contre celui-ci, le premier matériau magnétique pour former deux pièces magnétiques 72, 74 (partie b). Ces pièces ont sensiblement la hauteur de l'espaceur mais n'occupent qu'une faible partie du caisson.

On dépose ensuite sur l'ensemble, par tout moyen non électrolytique, et par exemple par pulvérisation cathodique, le second matériau magnétique 76 (partie c).

Enfin, on polit mécaniquement (partie d) la partie supérieure de la tête pour réaliser par exemple un arrondi 80, jusqu'à ce que soit dégagé le sommet de l'espaceur 42. Il subsiste alors deux parties 82, 84 du second matériau magnétique. Ces parties, avec une dureté Vickers de l'ordre de plusieurs centaines, vont protéger les parties 72, 74 en matériau plus tendre (dureté Vickers de l'ordre de 100) et limiteront ainsi l'usure de la tête dans la région de l'entrefer.

## Revendications

1. Procédé de réalisation d'une pièce polaire supérieure pour tête magnétique en couches minces, ce procédé comprenant une opération de dépôt électrolytique, dans un caisson (36) gravé dans une couche isolante (34), d'une couche d'un premier matériau magnétique de part et d'autre d'un espaceur amagnétique (42), ce procédé étant caractérisé par le fait qu'il comprend les opérations suivantes :
- on dépose électrolytiquement ledit premier matériau magnétique (52, 54) sur l'intégralité du fond du caisson et sur une partie seulement de la hauteur du caisson,
- on dépose sur l'ensemble un second matériau magnétique (56), ayant des propriétés magnétiques et/ou mécaniques de dureté supérieures à celles du premier, ce second dépôt n'étant pas électrolytique,
- on polit la surface de l'ensemble jusqu'à dégagement de l'espaceur amagnétique (42).

2. Procédé selon la revendication 1, caractérisé par le fait que le second matériau magnétique est déposé par pulvérisation cathodique.

3. Procédé de réalisation d'une pièce polaire supérieure pour tête magnétique en couches minces, ce procédé comprenant une opération de dépôt électrolytique, dans un caisson (36) gravé dans une couche isolante (34), d'une couche d'un premier matériau magnétique de part et d'autre d'un espaceur amagnétique (42), ce procédé étant caractérisé par le fait qu'il comprend les opérations suivantes :
- on dépose électrolytiquement ledit premier matériau magnétique (72, 74) sur une partie du fond du caisson adjacente à l'espaceur amagnétique (42) et sur toute la hauteur de cet espaceur amagnétique (42),
- on dépose sur l'ensemble un second matériau magnétique, (76), ayant des propriétés magnétiques et/ou mécaniques de dureté supérieures à celles du premier, ce second dépôt n'étant pas électrolytique,
- on polit la surface de l'ensemble jusqu'à dégagement de l'espaceur amagnétique (42).

4. Procédé selon la revendication 3, caractérisé par le fait que le second matériau magnétique est déposé par pulvérisation cathodique.

5. Pièce polaire supérieure pour tête magnétique en couches minces, cette pièce polaire étant disposée dans un caisson (36) gravé dans une couche isolante (34) de part et d'autre d'un espaceur amagnétique (42), caractérisée par le fait qu'elle comprend un premier matériau magnétique (52, 54) déposé électrolytiquement et occupant l'intégralité du fond du caisson et une partie seulement de la hauteur du caisson et un second matériau magnétique (62, 64) ayant des propriétés magnétiques et/ou mécaniques de dureté supérieures à celles du premier, et occupant le dessus du caisson, ce second matériau étant déposé par un moyen autre que la croissance électrolytique.

6. Pièce polaire supérieure pour tête magnétique en couches minces, cette pièce polaire étant disposée dans un caisson (36) gravé dans une couche isolante (34) de part et d'autre d'un espaceur amagnétique, caractérisée par le fait qu'elle comprend une premier matériau magnétique (72, 74) déposé électrolytiquement et occupant une partie du fond du caisson adjacent à l'espaceur amagnétique (42) et sur toute la hauteur de cet espaceur (42) et un second matériau magnétique (82, 84) ayant des propriétés magnétiques et/ou mécaniques de dureté supérieures à celles du premier et occupant le reste du caisson, ce second matériau étant déposé par un moyen autre que la croissance électrolytique.

7. Pièce polaire selon la revendication 6, caractérisée par le fait que le premier matériau magnétique (72, 74) occupe une largeur de l'ordre de 1 à quelques micromètres de part et d'autre de l'espaceur amagnétique (42).

8. Pièce polaire selon l'une quelconque des revendications 5 à 8, caractérisée par le fait que le second matériau magnétique (62, 64, 82, 84) est pris dans le groupe constitué par les alliages : nickelmolybdène-fer, fer-aluminium, fer-silicium-aluminium, cobalt-fer-silicium-bore, cobalt-zirconium-niobium, cobalt-zirconium.

## Patentansprüche

1. Herstellungsverfahren eines oberen Polschuhs eines Dünnschichten-Magnetkopfes, wobei dieses Verfahren eine elektrolytische Abscheidungsoperation einer Schicht aus einem ersten magnetischen Material in einer in eine Isolierschicht (34) geätzten Senke (36) umfaßt, beiderseits eines nichtmagnetischen Spacers (42), wobei dieses Verfahren **gekennzeichnet ist durch die Tatsache,**
daß es die folgenden Schritte umfaßt:
- man scheidet elektrolytisch auf der Gesamtheit des Bodens der Senke und nur über einen Teil der Höhe der Senke das genannte erste magnetische Material (52, 54) ab,
- man scheidet auf dem Ganzen ein zweites magnetisches Material (56) ab, das bessere magnetische und/oder - bezogen auf die Festigkeit - mechanische Eigenschaften aufweist als das erste, wobei diese zweite Abscheidung nicht elektrolytisch ist,
- man poliert die Oberfläche des Ganzen bis zur Freilegung des nichtmagnetischen Spacers (42).

2. Verfahren nach Anspruch 1, dadurch gekennzeichnet, daß das zweite magnetischen Material durch Kathodenzerstäubung abgeschieden wird.

3. Herstellungsverfahren eines oberen Polschuhs eines Dünnschichten-Magnetkopfes, wobei dieses Verfahren eine elektrolytische Abscheidungsoperation einer Schicht aus einem ersten magnetischen Material in einer in eine Isolierschicht (34) geätzten Senke (36) umfaßt, beiderseits eines unmagnetischen Spacers (42), und dieses Verfahren dadurch gekennzeichnet ist, daß es die folgenden Schritte umfaßt:
- man scheidet elektrolytisch das genannte erste magnetische Material (72, 74) auf einem an den nichtmagnetischen Spacer (42) angrenzenden Teil des Bodens der Senke und über die gesamte Höhe dieses nichtmagnetischen Spacers (42) ab,
- man scheidet auf dem Ganzen ein zweites magnetisches Material (76) ab, das bessere magnetische und/oder - bezogen auf die Festigkeit - mechanische Eigenschaften aufweist als das erste, wobei diese zweite Abscheidung nicht elektrolytisch ist,
- man poliert die Oberfläche des Ganzen bis zur Freilegung des nichtmagnetischen Spacers (42).

4. Verfahren nach Anspruch 3, dadurch gekennzeichnet, daß das zweite magnetischen Material durch Kathodenzerstäubung abgeschieden wird.

5. Oberer Polschuh eines Dünnschichten-Magnetkopfes, wobei dieser Polschuh angeordnet ist in einer in eine Isolierschicht (34) geätzten Senke (36), beiderseits eines nichtmagnetischen Spacers (42),
**dadurch gekennzeichnet**, daß er ein erstes magnetisches Material (52, 54) umfaßt, elektrolytisch abgeschieden und die Gesamtheit des Bodens der Senke und nur einen Teil der Höhe des Senke einnehmend, und ein zweites magnetisches Material (62, 64), das bessere magnetische und/oder - in bezug auf die Festigkeit - mechanische Eigenschaften hat als das erste und die Oberseite der Senke einnimmt, wobei dieses zweite Material durch ein anderes Mittel als das elektrolytische Wachstum abgeschieden wird.

6. Oberer Polschuh eines Dünnschichten-Magnetkopfes, wobei dieser Polschuh angeordnet ist in einer in eine Isolierschicht (34) geätzten Senke (36), beiderseits eines nichtmagnetischen Spacers (42),
dadurch gekennzeichnet, daß er ein erstes magnetisches Material (72, 74) umfaßt, elektrolytisch abgeschieden und einen an den nichtmagnetischen Spacer (42) angrenzenden Teil des Bodens der Senke einnehmend, über die gesamte Höhe dieses Spacers (42), und ein zweites magnetisches Material (82, 84), das bessere magnetische und/oder - in bezug auf die Festigkeit - mechanische Eigenschaften hat als das erste und den Rest der Senke einnimmt, wobei dieses zweite Material durch ein anderes Mittel als das elektrolytische Wachstum abgeschieden wird.

7. Polschuh nach Anspruch 6, dadurch gekennzeichnet, daß das erste magnetische Material (72, 74) auf beiden Seiten des nichtmagnetischen Spacers (42) eine Breite in der Größenordnung von 1 bis einige Mikrometer einnimmt.

8. Polschuh nach einem der Ansprüche 5 bis 8, dadurch gekennzeichnet, daß das zweite magnetische Material (62, 64, 82, 84) der Gruppe entnommen ist, die gebildet wird durch die Legierungen: Nickel-Molybdän-Eisen, Eisen-Aluminium, Eisen-Silicium-Aluminium, Kobalt-Eisen-Silicium-Bor, Kobalt-Zirkon-Niobium, Kobalt-Zirkon.

## Claims

1. Process for the production of an upper pole piece for a thin film magnetic head, said process comprising an operation of electrolytically depositing in a recess (36) etched in an insulating layer (34) of a layer of a first magnetic material on either side of an amagnetic spacer (42), said process being characterized in that it comprises the following operations:
- the first magnetic material (52, 54) is electrolytically deposited on the entire bottom of the recess and over only part of the height of the recess,
- on the assembly is deposited a second magnetic material (56) having magnetic and/or mechanical hardness properties superior to those of the first material, said second deposit not being electrolytic, the surface of the assembly is polished until the amagnetic spacer (42) is freed.

2. Process according to claim 1, characterized in that the second magnetic material is deposited by cathodic sputtering.

3. Process for the production of an upper pole piece for a thin film magnetic head, said process comprising an operation of electrolytically depositing in a recess (36) etched in an insulating layer (34) a layer of a first magnetic material on either side of an amagnetic spacer (42), said process being characterized in that it comprises the following operations:
- the first magnetic material (72, 74) is electrolytically deposited on part of the bottom of the recess adjacent to the amagnetic spacer (42) and over the entire height of said amagnetic spacer (42),
- on the assembly is deposited a second magnetic material (76) having magnetic and/or mechanical hardness properties superior to those of the first material, said second deposit not being electrolytic,
- the surface of the assembly is polished until the amagnetic spacer (42) is freed

4. Process according to claim 3, characterized in that the second magnetic material is deposited by cathodic sputtering.

5. Upper pole piece for a thin film magnetic head, said pole piece being placed in a recess (36) etched in an insulating layer (34) on either side of an amagnetic spacer (42), characterized in that it comprises a first, electrolytically deposited, magnetic material (52, 54) occupying the entire bottom of the recess and only part of the height of the recess and a second magnetic material (62, 64) having magnetic and/or mechanical hardness properties superior to those of the first material and occupying the top of the recess, said second material being deposited by a means other than electrolytic growth.

6. Upper pole piece for a thin film magnetic head, said pole piece being placed in a recess (36) etched in an insulating layer (34) on either side of an amagnetic spacer, characterized in that it comprises a first, electrolytically deposited, magnetic material (72, 74) occupying part of the bottom of the recess adjacent to the amagnetic spacer (42) and the entire height of said spacer (42) and a second magnetic material (82, 84) having magnetic and/or mechanical hardness properties superior to those of the first material and occupying the remainder of the recess, said second material being deposited by a means other than electrolytic growth

7. Pole piece according to claim 6, characterized in that the first magnetic material (72, 74) occupies a width of approximately 1 to a few micrometers on either side of the amagnetic spacer (42).

8. Pole piece according to any one of the claims 5 to 8, characterized in that the second magnetic material (62, 64, 82, 84) is chosen from within the group constituted by the alloys nickel-molybdenm-iron, iron-aluminium, iron-silicon-aluminium, cobalt-iron-silicon-boron, cobalt-zirconium-niobium and cobalt-zirconium.
